# EUROPEAN PATENT SPECIFICATION

(11) **EP 2 356 374 B1**
(45) Date of publication and mention of the grant of the patent: **26.11.2014**
(21) Application number: 09796134.6
(22) Date of filing: 01.12.2009
(51) Int. Cl.: F21V 5/04, G02B 3/00, F21Y 101/02, F21S 8/00

(54) **MODULAR OPTICAL SYSTEM OF A LIGHT TABLE**
MODULARES OPTISCHES SYSTEM EINES LEUCHTTISCHES
SYSTÈME OPTIQUE MODULAIRE D'UNE TABLE LUMINEUSE

(30) Priority: 11.12.2008 PL 38678508
(43) Date of publication of application: 17.08.2011
(73) Proprietor: Instytut Optyki Stosowanej, 03-805 Warszawa (PL); Instytut Badawczy Dróg I Mostów, 03-302 Warszawa (PL)
(72) Inventor: LITWIN, Dariusz, PL-00-681 Warszawa (PL); KRYSZCZYNSKI, Tadeusz, PL-01-034 Warszawa (PL); GALAS, Jacek, PL-05-092 Lomianki (PL); CZYZEWSKI, Adam, PL-00-132 Warszawa (PL)
(74) Representative: Woznicki, Jerzy
(86) International application number: PCT/PL2009/000103
(87) International publication number: WO 2010/068127

(56) References cited:
- EP-A1- 0 180 145
- EP-A2- 0 453 932
- DE-A1- 19 922 361
- GB-A- 2 391 702
- US-A1- 2008 266 874

## Description

The invention relates to a modular optical system of a light table to be used for road signs of variable content, informative signs or text tables.

There are known Light tables of variable content comprising rod lenses. The rod lenses of the prism shape usually of the square or hexagonal bases adhere to one another creating in that way a modular screen of the table. The Light Emitting Diodes (LEDs) are used in the light tables as light sources. They are mounted to the rear plate of the table in axes of the rod lenses.

A modular optical system for road signs presented in EP 1179219 consists of regular array of LEDs in equal distances one another wherein each LED is provided with a rod lens with a convex front surface. The LEDs are fixed in the rare plate of the road sign and the lenses are placed in their optical axes in special nests in the front plate. The cross section of the lenses is square. The dimension of the square side is equal the distance between diodes. After being fixed in the front plate they create a modular screen of the road sign.

The sun phantom effect occurs when the modular screen is illuminated directly by sunlight or other high intensity light source, which makes the information displayed very difficult to read out. In systems consisted of a source and light source assemblies the phantom phenomenon is usually decreased by using a specially arranges stops. However, they cause decrease of emitting light and consequently visibility of the table. The aim of the invention is to eliminate the phantom effect in a modular light table with simultaneously excellent visibility of the displaying message.

The modular optical system of the light table, comprising LEDs located in the axes of identical rod lenses of polygonal cross-section, in particular a square, hexagonal or octagonal, creating the modular table screen, according to the invention characterizes in that each rod lens has a convex paraboloidal part of circular contour, formed on the equilateral rode base situated toward the LED, and the front plane of the rod lens has truncated conical shape of acute angle ending in the top part with flat circular plane.

It is advantageous if the diameter of the circular plane is at minimum twice as small as the diameter of the contour of the paraboloidal part. In addition the contour of the paraboloidal part is separated from the contour of the edge of base by the surface constituting the assembly plane of the rod lens.

It is also advantageous if the contour of paraboloidal part is inscribed in the shape of the base of the rod lens.

In the advantageous realization of the system, the front planes of the lenses may have a polished conical surface, matt conical surface, permanent opaque layer covered conical surface, or 3D-structured conical surface.

In another advantageous realization of the system the front planes of the lenses are adhered by cover matching their shape, having in the axis of the rod lenses holes uncovering circular planes.

In the solution according to the invention, thanks to the shape of the front plane of the rod lenses the amount of external light coming to the diode through the rod lens is limited, which results in reduced incident illumination of the LEDs. The remaining light, which penetrates the rod lenses, is focused in a short distance just after the paraboloidal part of the lens. This further reduces illumination of the LEDs with dispersed external light and reduces phantom effect as well almost entirely eliminates imaging effect. In case of the polished conical front surface of the rod lenses the external light is refracted, in a way, so that the illumination of the LEDs is meaningless. The conical surface disperses light much more efficiently when matted or made 3D structured. As a result the phantom effect is weaker. In turn, the light emitted by the LED is focused by the paraboloidal part of the lens in the output circular plane, which increases visibility of displayed information. The conical part of the lenses can also be covered by a non-transparent layer or cover.

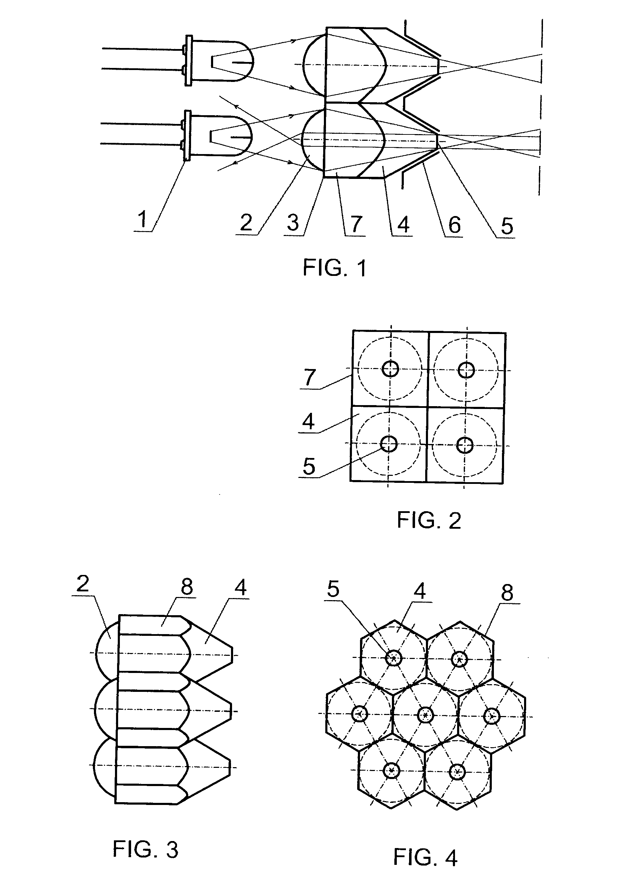

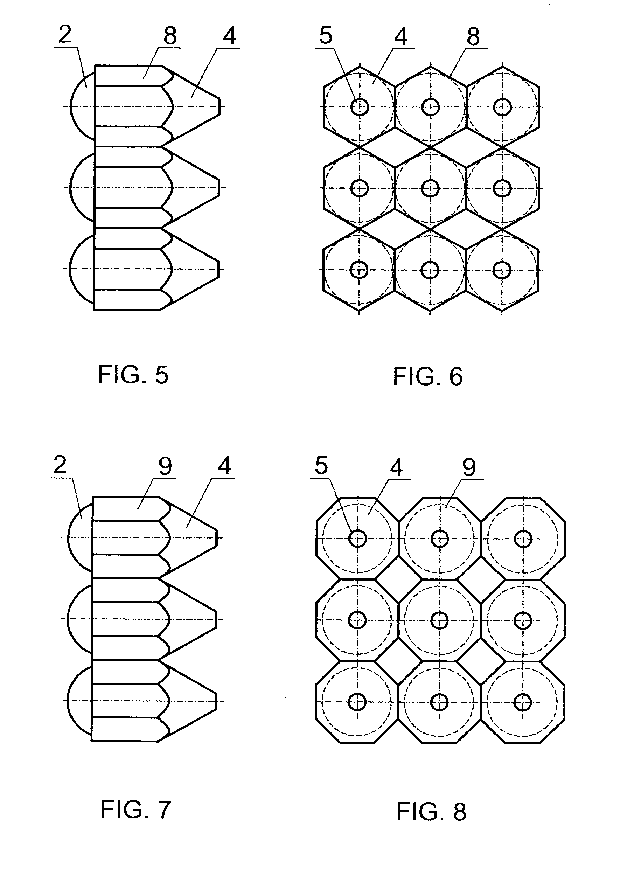

The invention has been presented in exemplary drawing in which fig. 1 shows an optical system of a road sign with a modular screen in longitudinal section, fig. 2 shows a fragment of the screen from fig. 1 in front view, fig. 3 shows a fragment of the modular screen from rod lenses of hexagonal cross-section in end view, fig. 4 shows a fragment of the screen from fig. 3 in front view, fig. 5 shows another fragment of the modular screen of rod lenses of hexagonal cross-section in end view, fig. 6 shows a fragment of the screen from fig. 5 in front view, fig. 7 shows a fragment of the modular screen of rod lenses of octagonal cross-section in end view, and fig. 8 shows a fragment of the screen from fig. 7 in front view.

As shown in fig. 1, the modular optical system of the light table consists of LEDs 1 located in the axes of identical rod lenses of square cross-section, constituting the modular screen of the light table. The rod lens has a convex paraboloidal part 2 of circular contour, located in the base 3 of the square body 7 situated toward the LED 1. The contour of the paraboloidal part 2 is separated from the contour of the edge of base 3 by the plane constituting the assembly plane of the rod lens. With a maximum diameter of the circular contour, it is inscribed in the shape of base 3. The plane of base 3 around the paraboloidal part 2, constituting the assembly plane, may be used for assembling and aligning the rod lens in the table housing. The front plane 4 of the lens has shape of truncated cone of acute cone angle, the top end of which is a flat circular plane 5. The adjacent lenses adhere to each other with the sides. The front planes 4 of the lenses are adhered by cover 6 matching their shape, having in the axis of the rod lenses holes uncovering the circular planes 5. Diameters of the circular planes 5 are many a time smaller than the diameter of the contour of paraboloidal part 2. Cover 6 over the front plane of the modular screen created by the rod lenses is installed on the table housing. Pits made in cover 6, matching the shape of front planes 4 of the lenses, facilitate their assembly and aligning from the outside of the road sign or information table. Cover 6 also additionally covers lenses' contact surfaces and limits access of external light.

As shown in fig. 2, the modular screen is made of conterminous rod lenses of square cross-section, the contracted front part of which ends with circular planes 5 through which the diode light is emitted, focused by paraboloidal part 2 of the lens. The contour of paraboloidal part 2 is shown with the dotted line. The conical part of front plane 4 may be polished, matt, covered with an opaque layer, or 3D-structured. In a light table with so executed modular screen, LEDs 1 are located at distances equal to the distances between the sides of the rod lenses.

Fig. 3 and 4 show a modular screen made of rod lenses with a hexagonal body 8. Such a screen may have the shape of a honeycomb.

In the execution shown in fig. 5 and 6, a modular screen made of rod lenses with a hexagonal body 8 has gaps between rows of adjacent rod lenses. The gaps between the lenses may be used to stiffen the screen by means of additional assembly elements.

In another execution, shown in fig. 7 and 8, a modular screen is made of rod lenses with an octagonal body 9. In this execution, the modular screen has gaps between lenses adhering to each other with the sides.

In the solution according to the invention, light emitted by LED 1 towards the screen falls on the rear part of the rod lens, where it is focused by its paraboloidal part 2. Due to that, the entire light emitted goes through the contracted end of the front part of the lens and gets to flat circular plane 5. Concurrently, the shape of front plane 4 prevents the phantom effect. In sunlight, which may be treated as parallel to the lenses' axis, an insignificant part of the light which passes circular plane 5 towards LEDs 1 will be focused at a very small distance behind paraboloidal part 2 of the lens. This will result in the very diode being only illuminated by highly dispersed light, and only a very small portion will fall on the element emitting light, i.e. on the element also reflecting light. This prevents the occurrence of the "phantom" and the imaging effects, i.e. generation of an image of an external light source.

In the solution according to the invention, conical front plane 4 may be polished, matt or 3D-structured in the form of grooves or pits on the surface. In the case of a polished side plane of the cone, external light is so deflected that only an insignificant part of it falls on the diode. Matting of the surface results in more effective light dispersion, and thus further reduction of the phantom effect. Conical front plane 4 may also be covered with a permanent opaque layer eliminating the impact of external light falling on the plane.

A light table with a system according to the invention may also comprise cover 6, which limits the volume of external light arriving at the screen front plane and which is used for the correct modular screen installation in the table housing.

## Claims

1. Modular optical system of a light table, comprising LEDs (1) located in the axes of identical rod lenses of polygonal cross-section, in particular square, hexagonal or octagonal, constituting the modular table screen, **characterised in that** each rod lens has a convex paraboloidal part (2) of circular contour, formed on the equilateral base (3) of the lens situated toward the LED (1), and the front plane (4) has truncated conical shape of acute angle ending in the top part with flat circular plane (5).

2. The system according to claim 1, wherein the diameter of the circular plane (5) is at minimum twice as small as the diameter of the contour of the paraboloidal part (2).

3. The system according to claim 1, wherein the contour of paraboloidal part (2) is separated from the contour of the edge of base (3) by the surface constituting the assembly plane of the rod lens.

4. The system according to claim 1, wherein the contour of paraboloidal part (2) is inscribed in the shape of base (3) of the rod lens.

5. The system according to claim 1, wherein the front planes (4) of the lenses have a polished conical surface.

6. The system according to claim 1, wherein the front planes (4) of the lenses have a matt conical surface.

7. The system according to claim 1, wherein the front planes (4) of the lenses have a conical surface covered with a permanent opaque layer.

8. The system according to claim 1, wherein the front planes (4) of the lenses have a 3D-structured conical surface.

9. The system according to claim 1, wherein the front planes (4) of the lenses are adhered by cover (6) matching their shape, having in the axis of the rod lenses holes uncovering circular planes (5).

## Patentansprüche

1. Das modulare optische System eines Leuchttisches, bestehend aus Leuchtdioden (1), gelegen in den Achsen von einheitlichen Stäbchenlinsen mit einem Querschnitt in der Form eines Polygons, insbesondere eines Quadrats, Sechs- oder Achtecks, welche die modulare Anzeige des Leuchttisches bilden, **dadurch gekennzeichnet, dass** jede der Stäbchenlinsen einen konvexen parabolischen Teil (2) mit einem kreisförmigen Umriss besitzt, geformt in einer gleichseitigen Grundfläche (3) der Linse von der Seite der Leuchtiode (1); die Stirnfläche (4) dagegen hat die Form eines Kegelstumpfes mit einem spitzen Winkel, der im Eckteil mit einer flachen Kreisfläche (5) abgeschlossen ist.

2. System nach Anspruch 1, **dadurch gekennzeichnet, dass** der Durchmesser der Kreisfläche (5) mindestens zweimal kleiner ist als der Durchmesser des Umrisses des parabolischen Teils (2).

3. System nach Anspruch 1, **dadurch gekennzeichnet, dass** der Umriss des parabolischen Teils (2) von dem Kantenumriss der Grundfläche (3) durch die Fläche getrennt ist, welche die Montageebene der Stäbchenlinse bildet.

4. System nach Anspruch 1, **dadurch gekennzeichnet, dass** der Umriss des parabolischen Teils (2) in die Form der Grundfläche (3) der Stäbchenlinse eingeschrieben ist.

5. System nach Anspruch 1, **dadurch gekennzeichnet, dass** die Stirnflächen (4) der Linsen eine polierte Kegelfläche besitzen.

6. System nach Anspruch 1, **dadurch gekennzeichnet, dass** die Stirnflächen (4) der Linsen eine matte Kegelfläche besitzen.

7. System nach Anspruch 1, **dadurch gekennzeichnet, dass** die Stirnflächen (4) der Linsen eine Kegelfläche mit einem beständigen Überzug besitzen.

8. System nach Anspruch 1, **dadurch gekennzeichnet, dass** die Stirnflächen (4) der Linsen eine Kegelfläche mit gestalteter Raumstruktur besitzen.

9. System nach Anspruch 1, **dadurch gekennzeichnet, dass** an den Stirnflächen (4) der Linsen eine an ihre Form angepasste Abschirmung (6) anliegt, die in der Achse der Stäbchenlinsen Öffnungen besitzt, welche die Kreisflächen (5) zeigen.

## Revendications

1. Le système optique modulaire d'une table lumineuse, composé de diodes électroluminescentes (1) situées dans les axes des lentilles à tige identiques de section transversale polygonale, en particulier carrée, hexagonale ou octogonale, constituant l'écran modulaire de la table, **caractérisé en ce que** chaque lentille à tige a une partie parabolique convexe (2) de contour circulaire, formée dans la base équilatérale (3) de la lentille du côté de la DEL (1), et la face avant (4) présente une forme tronconique avec un angle aigu, se terminant par la partie supérieure avec le plan circulaire plat (5).

2. Le système selon la revendication 1, **caractérisé en ce que** le diamètre de la surface circulaire (5) est au moins deux fois plus petit que le diamètre du contour de la partie parabolique (2).

3. Le système selon la revendication 1, **caractérisé en ce que** le contour de la partie parabolique (2) est séparé du contour de l'arête de la base (3) par une surface formant le plan de montage de la lentille à tige.

4. Le système selon la revendication 1, **caractérisé en ce que** le contour de la partie parabolique (2) s'inscrit dans la forme de la base (3) de la lentille à tige.

5. Le système selon la revendication 1, **caractérisé en ce que** les surfaces frontales (4) des lentilles ont une surface conique polie.

6. Le système selon la revendication 1, **caractérisé en ce que** les surfaces frontales (4) des lentilles ont une surface conique mate.

7. Le système selon la revendication 1, **caractérisé en ce que** les surfaces frontales (4) des lentilles ont une surface conique revêtue d'une couche solide opaque.

8. Le système selon la revendication 1, **caractérisé en ce que** les surfaces frontales (4) des lentilles ont une surface conique avec la structure spatiale formée.

9. Le système selon la revendication 1, **caractérisé en ce qu'**aux surfaces frontales (4) des lentilles adhère un couvercle (6) adapté à leur forme, présentant dans l'axe des lentilles à tige des orifices découvrant les surfaces circulaires (5).
